# EUROPEAN PATENT APPLICATION

(11) **EP 2 366 278 A2**
(43) Date of publication of application: **21.09.2011**
(21) Application number: 11158653.3
(22) Date of filing: 17.03.2011
(51) Int. Cl.: A01D 46/24, A01D 87/02

(54) **Fruit conveyor system for a harvesting machine, harvesting machine which includes said system and single fruit carrying unit for said conveyor system**

(30) Priority: 18.03.2010 ES 201030405
(71) Applicant: Argiles Disseny I Fabricacio, S.A., 25242 Miralcamp (ES)
(72) Inventor: Argiles Vilalta, Enric, 25242, MIRALCAMP (ES)
(74) Representative: Ponti Sales, Adelaida

(57) **Abstract**

It comprises a plurality of single fruit (4) carrying units (3), each of said units (3) including a bucket (8) for receiving a piece of fruit (4) and support means (8a, 8b, 9) of said bucket (8), said support means (8a, 8b, 9) allowing the pivoting movement of said bucket (8), means (5) for dragging said carrying units (3), said dragging means (5) determining a bucket (8) conveying circuit, said circuit including an outbound portion for conveying the buckets (8) towards the harvest site where an operator is located, and an inbound portion (5b) for moving the buckets (8) towards a frame (6) of the machine (2), once the operator has placed the fruit (4). Figures 1 and 2.

## Description

### FIELD OF THE INVENTION

The present invention relates to a fruit conveyor system for a fruit harvesting machine, to a harvesting machine which includes said conveyor system and to a single fruit carrying unit for said conveyor system.

### BACKGROUND OF THE INVENTION

In the state of the art, there are fruit harvesting machines having a wheel-mounted frame, the fruit conveyor system of which comprises means for conveying the fruit from the harvesting site where the operator is located to a loading receptacle envisaged in the rear part of the machine.

Patent number ES2148060 discloses a machine for harvesting fruit which includes a conveying device of the type described. This machine is equipped with a series of lateral horizontal platforms which can move in a direction transverse to the movement of the machine for the purpose of adapting to the width of the plot. Said platforms are arranged in such a manner as to define different harvest levels and are equipped with a support structure for operators who pick the fruit directly from the tree.

The fruit conveying means of the machine of this patent include a series of rotatably mounted lateral arms on either side of the centre frame of the machine that serve to convey the fruit from the platforms where the operators are located to a central conveyor belt. This central belt includes a tilted portion arranged throughout the machine and a vertical portion for discharging the fruit in the interior of the loading receptacle.

In the machine of this patent, as in other existing machines, the fruit is guided towards the loading receptacle by means of the aforementioned conveyor belts, which entails a number of drawbacks.

One of said drawbacks lies in the fact that the fruit receives blows while being guided along the belts, on coming into contact with each other, on being grazed by the sides of the belt or on jumping from one belt to another. This results in reduced quality of the fruit, which is harshly penalised by consumers.

Another drawback of the conveyor system based on conveyor belts resides in the fact that it requires the installation of a large number of hydraulic or electric motors to move each of the conveyor belts of the machine. As a result, the machine is heavy, expensive and complex to manufacture and maintain.

### DESCRIPTION OF THE INVENTION

The objective of the present invention is to resolve the aforementioned drawbacks by developing a fruit conveyor system for a harvesting machine having the advantage of substantially improving post-harvest treatment quality of the fruit, which results in increased benefits for the farmer due to non-penalisation for poor fruit quality.

In accordance with this objective, according to a first aspect, the present invention provides a system characterised in that the fruit conveying means comprise a plurality of single fruit carrying units, each of which includes a bucket for receiving a piece of fruit and supporting means for said bucket, said supporting means allowing the pivoting movement of said bucket, said conveying means comprising means for dragging said carrying units, said dragging means determining at least one bucket conveying circuit, said circuit including at least one outbound portion arranged for moving the empty buckets towards the harvest site where the operator is located and one inbound portion arranged for moving the full buckets towards the machine frame, once the operator has placed the fruit therein.

In the device of the present invention, the fruit is conveyed from the harvest site by means of a plurality of fruit carrying units that include buckets for depositing the fruit. These fruit carrying units are actuated by dragging means which determine at least one outbound portion towards the harvest site where an operator is located.

Due to this, each piece of fruit can be individually conveyed in a bucket from the harvest site where the operator is located towards the machine, without suffering spillage, blows or friction during the conveyance thereof. This results in improved fruit treatment quality and therefore greater profit for the farmer due to non-penalisation due to poor quality.

Preferably, said conveying circuit of the dragging means also includes an inbound portion for conveying the fruit-filled buckets towards a loading receptacle and a portion for discharging the buckets in the interior of a loading receptacle.

In this manner, the fruit can be individually conveyed and discharged, from the operator to the loading receptacle, due to which it is practically impossible for it to suffer any blows or friction.

Advantageously, said outbound/inbound portions are mounted onto a lateral support arm rotatably hinged on the frame of the machine.

Also advantageously, the system comprises dragging means that determine a plurality of bucket conveying circuits and, preferably, a plurality of lateral arms supporting the outbound/inbound portions of said plurality of circuits. Said arms are designed for being hinged at different heights on the frame. Therefore, it will be possible to work at different harvest levels, the fruit always being deposited in the buckets.

Also preferably, the portions for discharging the buckets of one or several circuits are mounted onto a support structure for inserting into said receptacle, said structure including means for pivoting said buckets into the discharge position.

On being said support structure adequate for inserting in the interior of the receptacle, the fruit can be gently discharged without suffering blows.

Advantageously, said support structure comprises a device for distributing the fruit discharged by the buckets, said distribution device being provided with a pivoting element that includes means for receiving and depositing the fruit discharged by the buckets.

This device enables the uniform distribution of the fruit stemming from the discharging portions, preventing the pieces of fruit from coming into contact with each other.

Also advantageously, said distribution device comprises means for detecting the receptacle load level. This allows the filling operation of the receptacle to be automatically controlled.

According to a preferred embodiment, said dragging means comprise at least one chain or cable whereto the support means of said buckets are fixed, said chain or cable determining a bucket conveying circuit towards an operator.

Preferably, said conveyor system comprises means for guiding said chain or cable, said guiding means comprising a plurality of pulleys arranged along the conveying circuit of said chain or cable, wherein at least one of the pulleys is integrally mounted onto a drive shaft for moving the chain or cable.

Advantageously, said drive shaft is mounted onto the support structure of the discharging portion of the conveying circuit. This simplifies installation of the system, particularly when said system has a plurality of bucket conveying circuits, as the drive shaft itself can be used to actuate pulleys that guide the discharge portions of different circuits that converge on the same support structure. On the other hand, the hydraulic or electric motor which actuates said shaft can be mounted onto said support structure.

Preferably, said guiding means comprise a plurality of guide parts arranged along said circuit, each of said parts including an opening provided on the lower edge for the passage of an outbound portion of a chain or cable and an opening provided on the upper edge for the passage of the inbound portion of the same chain or cable.

These parts have the advantage of guiding, at the same point of the path, both the outbound and inbound portion of the chain or cable.

Also preferably, said guiding means comprise an elbow for guiding the outgoing chain or cable of the support structure, said elbow including an opening on one of its edges for the passage of the outbound portion of the chain or cable, once the fruit has been discharged.

The radius of this elbow is appropriate for allowing the buckets to exit the support structure without touching each other and without touching the loading receptacle.

Advantageously, said guiding means comprise a pulley for laterally guiding the outbound/inbound portions of the circuit ends when the lateral arm that supports them rotates in a certain direction.

According to a second aspect, the present invention provides a machine for comprising a frame provided with machine controlled self-propulsion and conveying means, characterised in that it comprises the claimed conveyor system.

This machine has the advantage of being simpler and easier to manufacture than the machines of the state of the art, as conveyor belts have been substituted for simple bucket drive circuits which can all be actuated by a drive shaft connected to a single hydraulic motor arranged, for example, on the support structure of the discharge portions. Additionally, the machine is lighter, which enormously facilitates conveyance thereof in the field.

Preferably, the machine comprises a platform for supporting the loading receptacle, said platform being vertically moveable for lowering said receptacle when the load level detection means of the distribution device come into contact with the fruit and send a signal to the platform actuation means.

In this manner, the loading receptacle is automatically filled with fruit and, when full, the same load level detection means can send a signal to the motor that actuates the conveyor system to stop the discharge of buckets.

According to a third aspect, the present invention provides a carrying unit for pieces of fruit for the claimed conveyor system, which comprises a bucket for receiving a piece of fruit and support means of said bucket, and which is characterised by the fact that the support means of said bucket include a handle for integrally joining to said dragging means and two shafts joined to two opposing ends of said bucket, said shafts being susceptible of freely pivoting with respect to said handle for maintaining said bucket in a horizontal position throughout the conveying circuit of said dragging means.

The fruit carrying units of the present invention have the advantage of including buckets which are rotatably hinged with respect to the handles that support them, so that they can freely pivot 360° with respect to said handles in the manner of the baskets of a big wheel. Therefore, the buckets can maintain their horizontal position while the handles are vertically moved by the dragging means. This allows said buckets to ascend full of fruit to the upper part of the machine, descend inside the loading receptacle to discharge the fruit and pivot to return to the operators.

Preferably, one of the ends of the bucket comprises a projection arranged for cooperating with a stop element of the support structure of the discharge portions of the dragging means, said projection causing said bucket to pivot on stopping against said stop element.

Advantageously, said bucket is made of elastomeric material, such as for example gum or rubber. This material is very adequate due to being very light, easy to clean and prevents grazing of the pieces of fruit.

### BRIEF DESCRIPTION OF THE DRAWINGS

In order to better understand the foregoing, a set of drawings are attached wherein, schematically and only by way of non-limiting example, a practical case of embodiment has been represented.

In said drawings,
Figure 1 shows a schematic plan view of a harvesting machine equipped with a plurality of bucket conveying circuits.
Figure 2 shows a perspective view of the inbound/outbound portions of one end of a bucket conveying circuit.
Figure 3 shows a side schematic view of a harvesting machine, wherein the support structure of the discharge portions of the circuit can be observed.
Figure 4 shows a perspective view of the interior of the support structure of the discharge portions of the circuits.
Figure 5 shows a perspective view of the same support structure of figure 4 wherein all the discharge portions of the bucket circuits have been mounted.
Figures 6a, 6b and 6c show, respectively, a perspective plan and side view of a single fruit carrying unit of the present invention.
Figure 7 shows a perspective view of a lateral support arm of the inbound/outbound portions of one end of the circuit. For the sake of clarity, the chain with the buckets has not been represented in this figure.
Figure 8 shows a perspective view of the same arm of figure 7 pivoting towards one of the sides of the frame of the machine.

### DESCRIPTION OF A PREFERRED EMBODIMENT

A preferred embodiment of the conveyor system 1 of the present invention mounted onto a fruit harvesting machine 2, such as for example a pear or apple harvesting machine, is described below.

As described earlier, the conveyor 1 system of the present invention has the peculiarity of using single fruit 4 carrying units 3, rather than conveyor belts, for collecting the fruit 4 picked up by the operators.

In the described embodiment, the fruit 4 carrying units 3 are driven by link chains 5 which determine six independent circuits that move single fruit 4 carrying units 3.

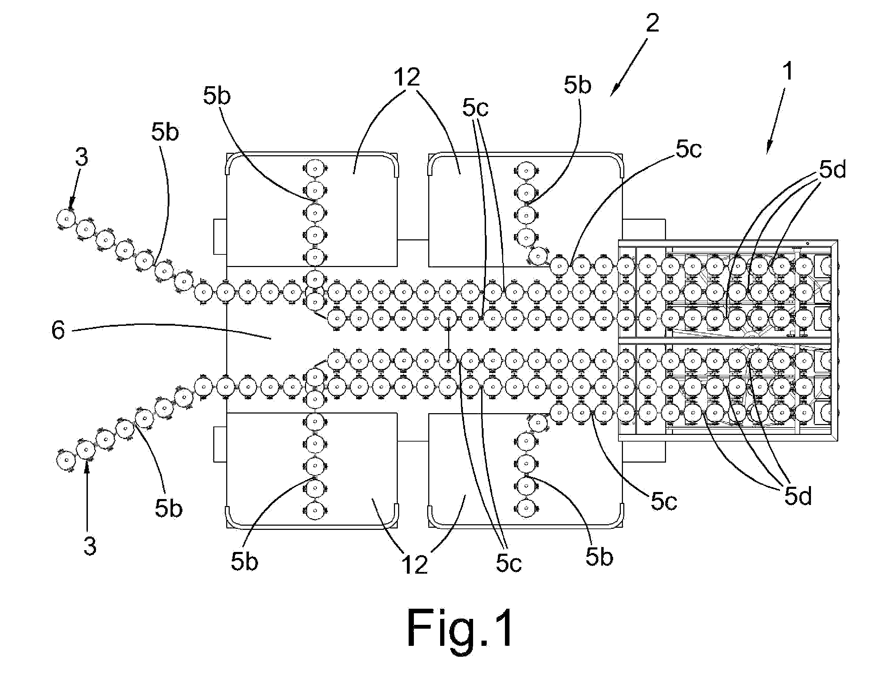

Figure 1 schematically represents a plan view of the six chain 5 circuits. Each of these circuits include an outbound portion 5a for moving the fruit 4 carrying units 3 towards the harvest site where the operator is located, an inbound portion 5b for moving the units 3 towards the frame 6 of the machine 2, once the operator has placed the fruit 4, an inbound portion 5c for moving the units 3 towards a loading receptacle 7 and a portion 5d for discharging the carrying units 3 in the interior of the loading receptacle 7.

Thanks to these circuits, each piece of fruit 4 may be individually conveyed in a carrying unit 3 from the harvest site where the operator is located to the loading receptacle 7 without suffering blows or grazing during conveyance.

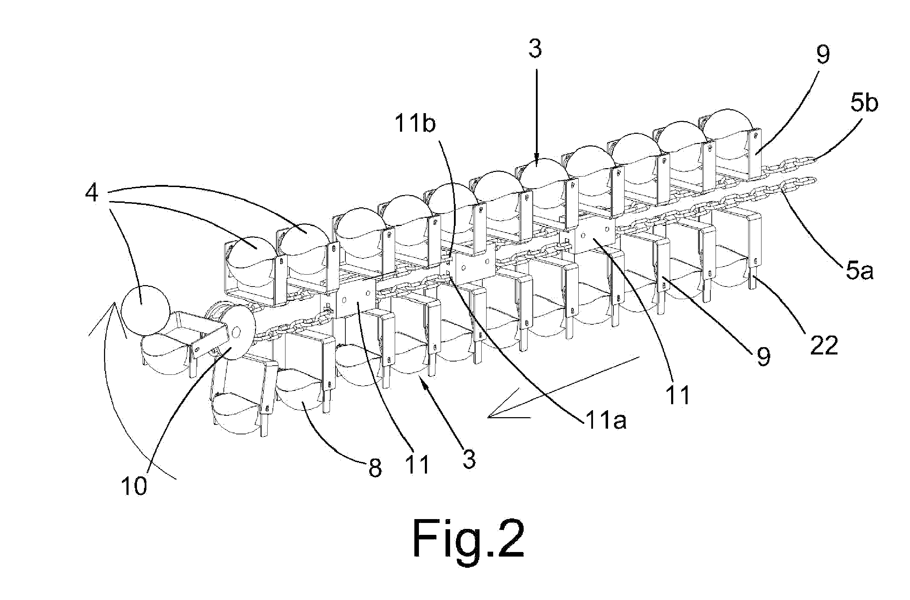

Figure 2 shows a perspective view of the end of one of the aforementioned circuits, wherein an outbound portion 5a of the chain 5 up to the operator and an inbound portion 5b of the chain 5 with the carrying units 3 full of fruit 4 can be observed.

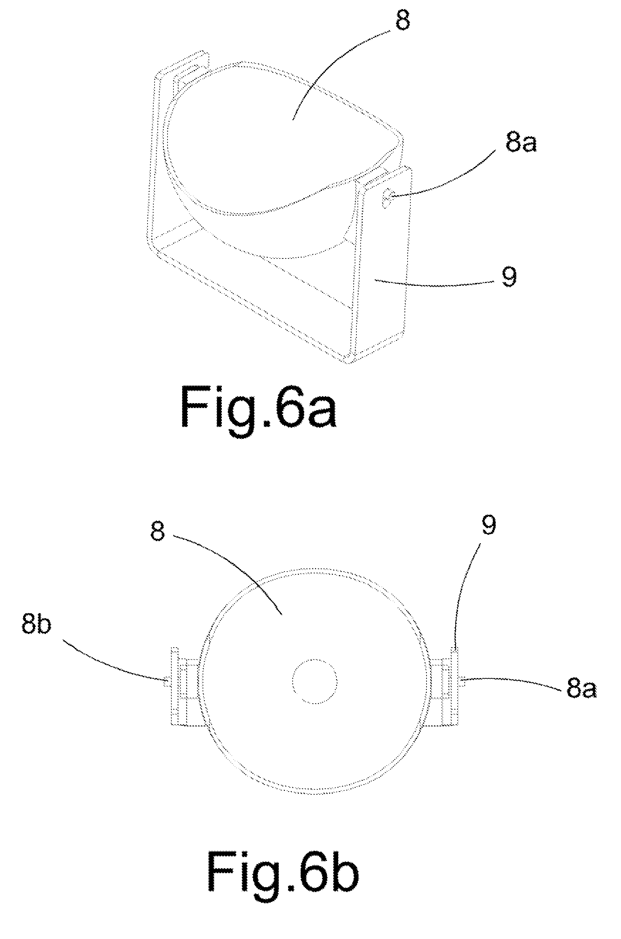

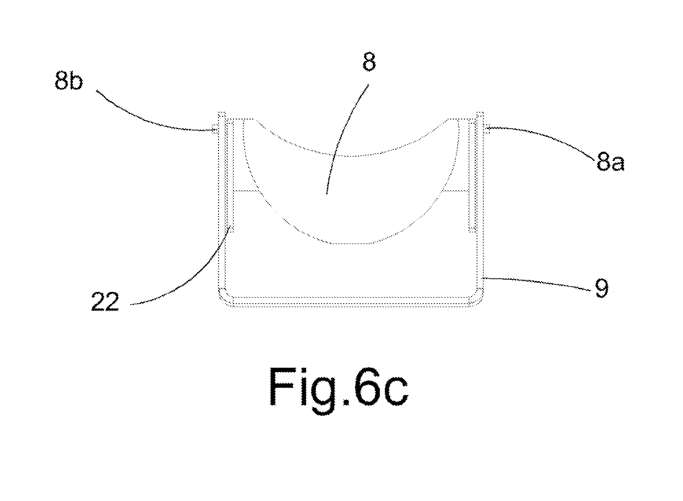

As seen in figure 2 and in figures 6, each of these fruit 4 carrying units 3 includes a rubber bucket 8 for receiving the fruit and a U-shaped support handle 9 integrally joined to the dragging chain 5. The bucket 8 has the peculiarity of including, at its opposed ends 8a, 8b two shafts which are susceptible of freely pivoting 360° with respect to the handle 9 (as in the case of a big wheel). This allows the buckets 8 to maintain their horizontal position throughout the circuit while the handles 9 are driven by the chain 5 towards the operators.

Returning to figure 2, it can be observed how the chain 5 is guided, at this end, by a pulley 10 and guiding parts 11. Each of the parts 11 include an opening 11a on the lower edge for passage of the outbound portion 5a and an opening 11b on the upper edge for the inbound portion 5b.

The pulleys 10 and guiding parts 11 of the ends of the circuits are mounted onto lateral support arms 26 which are rotatably hinged on the frame 6 of the machine 2 in order to horizontally pivot the ends of the chains 5.

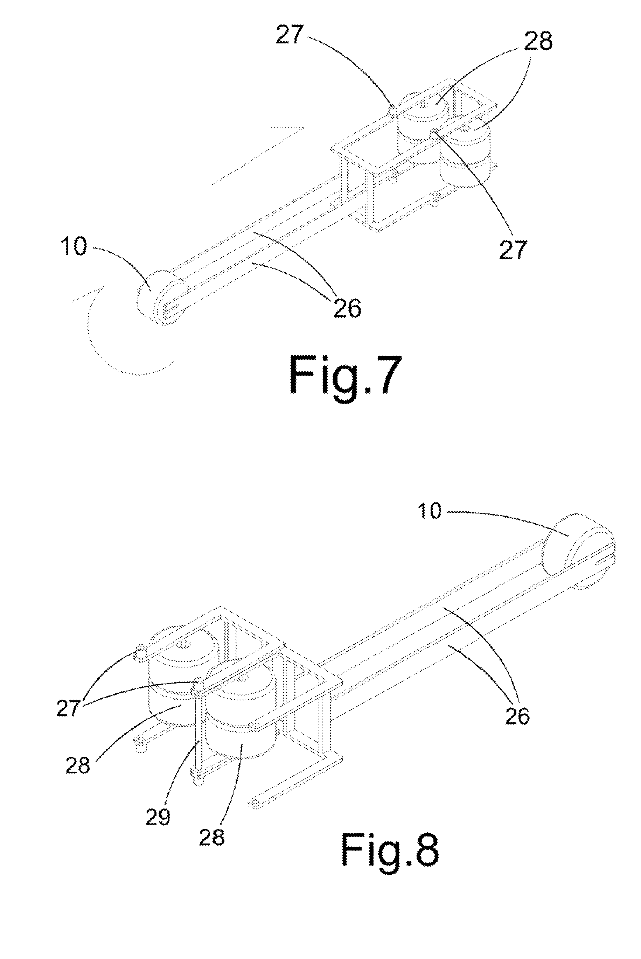

Figure 7 shows one of said support arms 26 hinged at two pivot points 27 from a frame structure 6. A double pulley 28 has been arranged in correspondence with each of said pivot points 27, which acts laterally on outbound/inbound portions 5a, 5b of the chain 5 or cable when the arm 26 pivots. To this end, the shaft of each of the pulleys 28 has been arranged aligned with one of the pivot points 27 of the arm 26. As shown in figure 8, in order to pivot the arm 26 in a certain direction, the corresponding pivot point 27 must be secured by means of a bolt 29 which acts as a pivot shaft.

The discharge portions 5d of the buckets 8 of all the circuits converge on a structure 13 or support box having adequate dimensions for being inserted into the interior of the loading receptacle 7.

This structure 13 is arranged on the rear part of the machine 2, having two drive shafts 14 mounted thereon which actuate, respectively, a first 15 and second 16 group of drive pulleys for moving the discharge portions 5d of the chains 5. Said structure 13 has a third drive shaft 17 which actuates, through gears, a pivoting wheel 18 which serves to distribute the fruit in the interior of the loading receptacle 7. The two shafts 14 and shaft 17 are actuated by a single hydraulic motor provided on said structure 13.

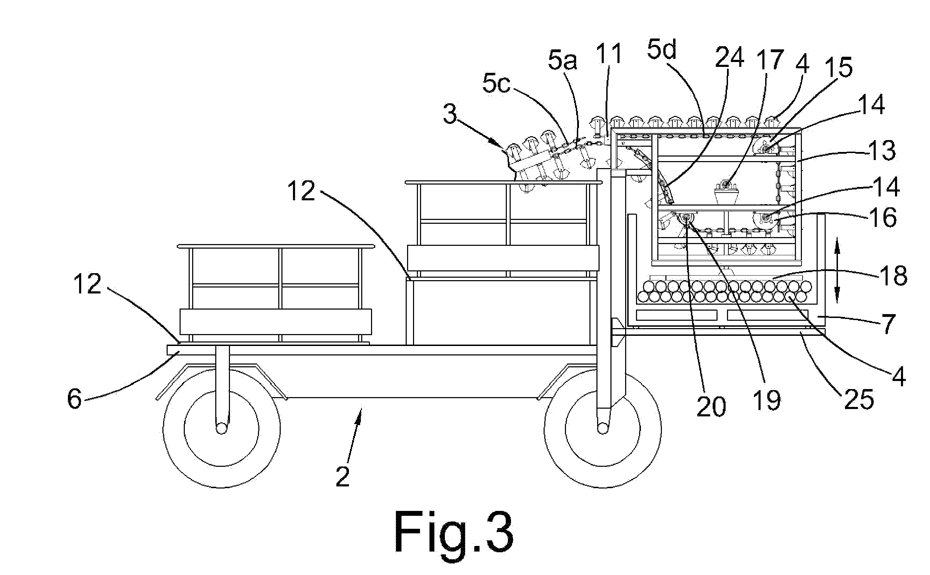

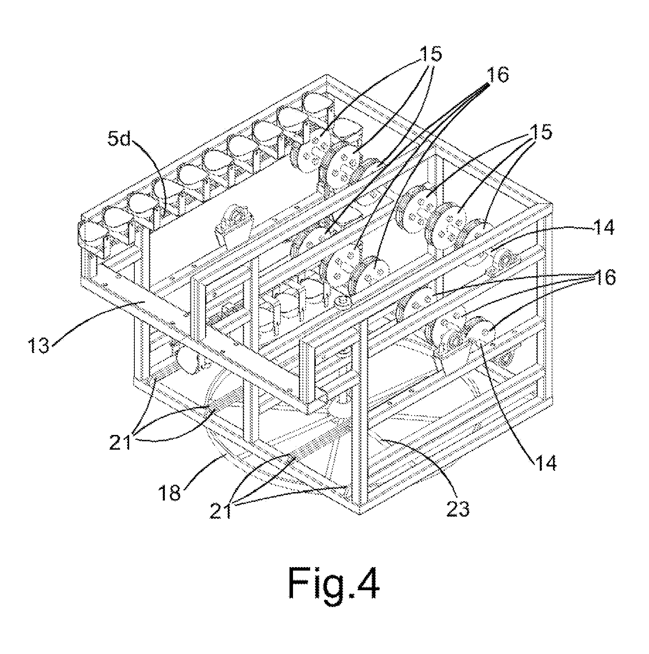

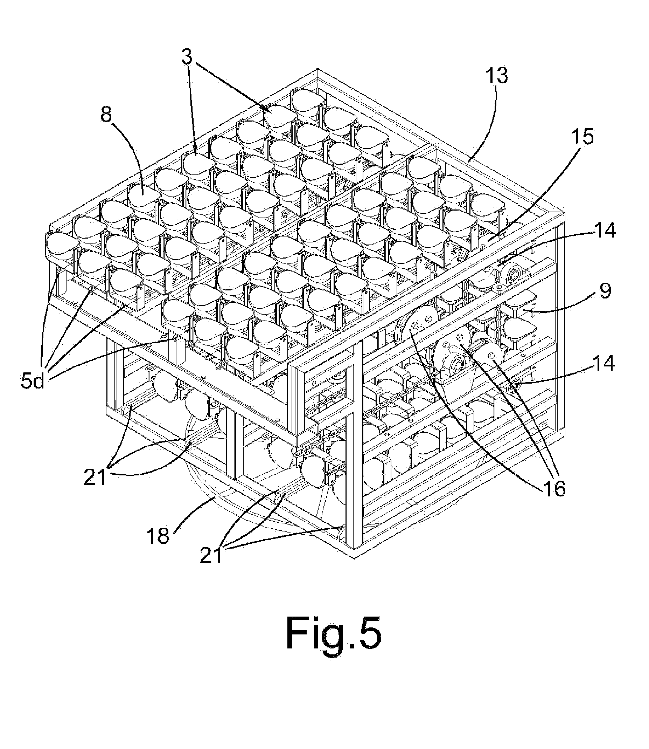

As can be seen in figures 3 to 5, the buckets 8 enter the support structure 13 dragged by the chains 5, which in this portion of the path are guided by other guiding parts 11 and by the first group 15 of drive pulleys. Once inside the structure 13, the chains 5 descend to the base guided by the second group 16 of drive pulleys. Once at the base of the structure 13, the chains 5 move horizontally, guided by a third group of pulleys 19 mounted onto a guide shaft 20.

As they move along the base of the structure 13, the buckets 8 pivot to discharge the fruit 4. To this end, six stop elements 21 have been envisaged, one per circuit, arranged in six different points of the base of the structure 13. Each of these stop elements 21 are designed to cooperate with a projection 22 of a bucket 8. The buckets 8 pivot on stopping against the projections 22 with the stop elements 21 of the structure 13 (see figure 3).

The fruit 4 discharged by the buckets 8 is received by plastic strips (not represented) which are joined to the spokes 23 of the pivoting wheel 18 in charge of distributing the fruit 4 in the interior of the receptacle 7. Thanks to this pivoting wheel 18 provided with plastic bands, the pieces of fruit 4 are gently deposited in the interior of the receptacle 7 without touching each other, being distributed homogeneously.

In order to exit the support structure 13, the dragging chains 5 of the buckets 8 are guided by guiding elbows 24, each of which comprises a lateral opening for passage of the chain 5. As can be seen in figure 3, these guiding elbows 24 have been provided with the adequate curvature to prevent the buckets 8 of a single chain 5 from touching each other or touching the loading receptacle 7 when they ascend to exit the support structure 13.

In order for the receptacle 7 to be filled automatically, the fruit distribution device 4 consisting of the pivoting wheel 23 and the plastic strips have a pair of sensors (not represented) to detect the fruit 4 load level. These sensors are associated with actuation means in charge of vertically moving a platform 25 that supports the loading receptacle 7 on the rear part of the machine 2. Therefore, when the sensors come into contact with the fruit 4, they send a signal to the platform 25 actuation means to lower the receptacle 7. In this manner, the receptacle 7 is automatically filled until those same sensors order the motor that actuates the drive shafts 14 that move the chains 5 to stop.

Despite the fact that a specific embodiment of the present invention has been described and represented, it is evident that a person skilled in the art can introduce variants and modifications or substitute details for other, technically equivalent ones without departing from the sphere of protection defined by the attached claims. For example, although reference has been made in the present specification to a plurality of chains 5 for dragging the fruit 4 carrying units 3, it would be possible to use cables or other equivalent types of dragging means.

## Claims

1. Fruit (4) conveyor system (1) for a harvesting machine (2), which comprises means for conveying the fruit from the harvest site where the operators are located to a loading receptacle (7) provided on the machine (2), **characterised in that** said conveying means comprise a plurality of single fruit (4) carrying units (3), wherein each of said units (3) includes a bucket (8) for receiving a piece of fruit (4) and support means (8a, 8b, 9) of said bucket (8), said support means (8a, 8b, 9) allowing the pivoting movement of said bucket (8), said conveying means comprising dragging means (5) of said carrying units (3), said dragging means (5) determining at least one bucket (8) conveying circuit, said circuit including at least one outbound portion (5a) arranged to convey the empty buckets (8) towards the harvest site where the operator is located, and at least one inbound portion (5b) arranged to convey the buckets (8) towards a frame (6) of the machine (2) once the operator has placed the fruit (4) therein.

2. System, according to claim 1, wherein said bucket (8) conveying circuit also includes an inbound portion (5c) for conveying the fruit-filled (4) buckets (8) towards the loading receptacle (7) and a portion (5d) for discharging said buckets in the interior of the loading receptacle (7).

3. System, according to any of the preceding claims, wherein said outbound/inbound portions (5a, 5b) of the buckets (8) towards the operator's harvest site are mounted onto a lateral arm (26) rotatably hinged on the frame (6) of the machine (2).

4. System, according to any of claims 2 to 3, wherein said portion (5d) for discharging the buckets (8) is mounted onto a support structure (13) for being inserted in the interior of said loading receptacle (7), said structure (13) including means (21) for pivoting said buckets (8) into the discharge position.

5. System, according to claim 4, wherein said support structure (13) comprises a device (18, 23) for distributing the fruit (4) discharged by the buckets (8), said distribution device being provided with a pivoting element (18) that includes means for receiving and depositing the discharged fruit.

6. System, according to any of the preceding claims, wherein said dragging means comprise at least one chain (5) or cable whereto the support means (8a, 8b, 9) of said buckets (8) are fixed, said chain (5) or cable determining a bucket (8) conveying circuit towards an operator.

7. System, according to claim 6, which comprises means for guiding said chain or cable, said guiding means comprising a plurality of pulleys (10, 15, 16, 19) arranged throughout the conveying circuit of said chain (5) or cable, wherein at least one of the pulleys (15, 16) of said circuit is integrally mounted onto a drive shaft (14) for moving the chain (5) or cable.

8. System, according to claims 4 and 7, wherein said drive shaft (14) is mounted onto the support structure (13) of the discharge portion (5d) of the conveying circuit.

9. System, according to claim 7, wherein said guiding means comprise a plurality of guiding parts (11) arranged throughout said circuit, each of said parts including an opening (11a) provided on the lower edge for the passage of the outbound portion (5a) of a chain (5) or cable and an opening (11b) provided on the upper edge for the passage of the inbound portion (5b) of the same chain (5) or cable.

10. System, according to claim 7, wherein said guiding means comprise an elbow (24) for guiding the exit of the chain (5) or cable of the support structure (13), said elbow (24) including an opening on one of its edges for passage of the outbound portion (5a) of the chain (5) or cable, once the fruit has been discharged (4).

11. Fruit (4) harvesting machine (2) which comprises a frame (6) provided with machine controlled self-propulsion and conveying means (2), **characterised in that** it comprises the conveyor system (1) according to any of claims 1 to 10.

12. Machine, according to claim 11, which comprises a platform (25) for supporting the loading receptacle (7), said platform (25) being vertically movable for lowering said receptacle (7) when the means for detecting the load level of the fruit (4) distribution device (18, 23) come into contact with the fruit (4) and send a signal to the platform (25) actuation means.

13. Single fruit (4) carrying unit (3) for the conveyor system (1), according to any of claims 1 to 10, **characterised in that** the support means of said bucket (8) include a handle (9) for integrally joining thereof to said dragging means (5) and two shafts (8a, 8b) joined to two opposed ends of said bucket (8), said shafts (8a, 8b) being susceptible of pivoting freely with respect to said handle (9) for maintaining said bucket (8) in a horizontal position throughout the conveying circuit of said dragging means (5)

14. Unit (3), according to claim 13, wherein one of the ends of the bucket comprises a projection (22) arranged to cooperate with a stop element (21) of the support structure (13) of the discharge portion (5d) of the dragging means (5), said projection (22) causing the pivoting of said bucket (8), on stopping against said stop element (21).

15. Unit (3), according to any of claims 13 or 14, wherein said bucket (8) is made of elastomeric material.
